# EUROPÄISCHE PATENTANMELDUNG

(11) **EP 2 933 483 A1**
(43) Veröffentlichungstag der Anmeldung: **21.10.2015**
(21) Anmeldenummer: 14177650.0
(22) Anmeldetag: 18.07.2014
(51) Int. Cl.: F03D 11/02, F16H 57/08

(54) **Antriebssystem einer Windkraftanlage**

(30) Priorität: 15.04.2014 DE 102014207230
(71) Anmelder: Siemens Aktiengesellschaft, 80333 München (DE)
(72) Erfinder: Deicke, Matthias, 31311 Uetze / Schwüblingsen (DE); Tenbrock, Stefan, 46397 Bocholt (DE)

(57) **Zusammenfassung**

Die vorliegende Erfindung betrifft Antriebssystem einer Windkraftanlage. Die Windkraftanlage umfasst ein mit einer Windrotorwelle verbindbares Übersetzungsgetriebe (1), insbesondere mit einer oder mehreren Planetengetriebestufen (11, 12), und einen dem Getriebe (1) nachgeschalteten Generator (2). Sowohl das Getriebe (1) als auch der Generator (2) sind in Gleitlagern (117, 127, 231, 234, 237) gelagert.

## Beschreibung

Die vorliegende Erfindung betrifft ein Antriebssystem einer Windkraftanlage (= WKA).

Triebstränge für WKA sind bekannt und werden eingesetzt, um die Rotationsenergie eines durch den Wind in Bewegung gesetzten Windrotors über einen mit dem Windrotor gekoppelten Generator in elektrische Energie umzuwandeln. Dabei erreicht der Windrotor typischerweise Drehzahlen im Bereich von etwa 10 bis 20 min⁻¹.

Ein großer Teil der bestehenden WKA ist mit schnell laufenden Generatoren mit einer Drehzahl von 1000 bis 2000 min⁻¹ ausgestattet. Zur Übersetzung der relativ langsamen Drehzahl des Windrotors auf die Generatordrehzahl wird ein drei- oder mehrstufiges Getriebe zwischengeschaltet, das in Kombination mit dem Generator allgemein als Triebstrang bezeichnet. Die beiden Triebstrangkomponenten werden im Wesentlichen unabhängig voneinander ausgelegt und über konventionelle Kupplungen miteinander verbunden. Das bedeutet, dass der Triebstrang, der in diesem Fall als "aufgelöster Triebstrang" bezeichnet wird, ein Übersetzungsgetriebe mit drei oder mehr Übersetzungsstufen, eine Kupplung und einen Generator umfasst, welche in dieser Reihenfolge in der Gondel der WKA hinter der Rotorwelle angeordnet sind.

Nachteilig hierbei ist, dass der Triebstang einen vergleichsweise hohen Platzbedarf benötigt und aufgrund der Vielzahl an Bauteilen eine komplexe Bauform aufweist.

Neben dieser klassischen Getriebelösung werden auch Generatoren eingesetzt, die getriebelos mit dem Windrotor gekoppelt sind. Bei dieser als "Direct Drive" bezeichneten Bauform wird der langsam laufende Generator direkt durch den Windrotor angetrieben. Nachteilig hierbei ist, dass aufgrund des hohen Drehmomentes, welches direkt aus dem Windrotor in den Generator eingeleitet wird, der Generator und insbesondere der Rotor des Generators, der im Folgenden auch als Läufer bezeichnet wird, einen vergleichsweise großen Durchmesser aufweisen. Dies geht einher mit vergleichsweise großen Abmessungen und einem hohen Gewicht des Triebstrangs.

Ein drittes Konzept sieht vor, einen mittelschnell laufenden Generator und ein Getriebe fest zu einer Triebstrangkomponente miteinander zu verbinden, um eine kompakte Getriebe-Generator-Einheit für WKA zu erhalten. Ein solcher Triebstrang ist beispielsweise in der EP 2 508 753 A1 (Siemens AG; Winergy AG) 10.10.2012 beschrieben. Der aus dieser Offenlegungsschrift bekannte Triebstrang für eine WKA weist ein Getriebe mit einem Getriebegehäuse auf, das über eine langsam laufende Antriebswelle mit einem Windrotor verbunden ist. Weiterhin ist ein Generator vorgesehen, der ein fest mit dem Getriebegehäuse verbundenes Generatorgehäuse aufweist. Ein Läufer des Generators wird über eine Sonnenradwelle des Getriebes angetrieben. Durch den sich gegenüber einem feststehenden Generator-Stator drehenden Läufer wird mittels elektrischer Induktion in an sich bekannter Weise die Rotationsenergie des Windrotors in elektrische Energie umgewandelt. Bei modernen WKA-Anlagen dieser Bauart ist das Übersetzungsgetriebe z.B. als ein zweistufiges Planetengetriebe und der Generator z.B. als ein Permanent-Magnet-Generator (= Perm-Generator) ausgebildet.

Die direkte Verbindung des Getriebes mit dem Generator führt zu einer wesentlichen Verkürzung des Antriebsstranges gegenüber dem "aufgelösten Triebstrang". Die Kupplung zwischen Getriebe und Generator entfällt beim mittelschnellen Antriebsstrang und wird durch gleichwirkende Verbindungselemente ersetzt. Mittelschnell drehende Anlagen benötigen im Vergleich zu Permanent-Magnet-Direct-Drives eine geringere Menge an Permanent-Magneten. Die im Vergleich zu herkömmlichen aufgelösten Antrieben geringeren Abmessungen und das geringere Gewicht der mittelschnellen Antriebe erlauben neue Gondelkonfigurationen.

In allen Antriebsstrangkonfigurationen stellen Wälzlager eine der wesentlichen Ausfallursachen einer WKA dar.

Für Anwendungen mit aufgelöstem Triebstrang wurden in der Vergangenheit bereits Lösungen zum Ersatz der Wälzlager durch Gleitlager entwickelt.

Für Direct-Drives kommt der Einsatz von Gleitlagern nach heutigem Stand der Technik nicht oder nur sehr bedingt in Frage. Ein wesentlicher Grund dafür ist, dass bei Direct-Drives der Lagerdurchmesser so groß ist, dass keine passenden Gleitlager existieren bzw. in Umfangsrichtung segmentierte Gleitlager zum Einsatz kommen müssen.

Bei mittelschnellen Antrieben, insbesondere in modularer Bauweise, bei denen der Generator in Form einer separaten, abgeschlossenen Komponente mit dem Getriebe verbunden wird, ist es bekannt, für die Planetenräder Gleitlager anstelle konventioneller Wälzlager zu verwenden. Allerdings sind bislang die Generatoren weiterhin mit Wälzlager ausgestattet, so dass erhebliche Aufwendungen für die Wartung bzw. Servicemöglichkeit ("Serviceability") dieser Wälzlager erbracht werden müssen: Bisher wird bei modular aufgebauten, mittelschnellen Antriebssträngen eine Trennstelle zwischen Generator und Getriebe vorgesehen. Diese Trennstelle dient der Trennbarkeit beider Komponenten, um im Falle eines generatorseitigen Wälzlagerschadens den Generator vom Getriebe trennen zu können.

Aufgabe der vorliegenden Erfindung ist es, einen Antriebsstrang einer WKA, bei dem das Getriebe und der Generator direkt miteinander verbunden sind, anzugeben, der zuverlässiger ist und eine geringere Ausfallwahrscheinlichkeit besitzt.

Diese Aufgabe wird erfindungsgemäß durch ein Antriebssystem mit den in Anspruch 1 angegebenen Merkmalen gelöst.

Das erfindungsgemäße Antriebssystem für eine Windkraftanlage umfasst ein mit einer Windrotorwelle verbindbares Übersetzungsgetriebe und einen Generator. Das Übersetzungsgetriebe kann eine oder mehrere Planetengetriebestufen umfassen. Der Generator ist in Richtung des Kraftflusses gesehen hinter dem Getriebe angeordnet, d.h. auf der vom Windrotor abgewandten Seite des Getriebes. Sowohl das Getriebe als auch der Generator sind in Gleitlagern gelagert. Dabei kann "ein in Gleitlagern gelagertes Getriebe" bedeuten, dass in dem Getriebe die Planetenradlager und/oder die Planetenträgerlager als Gleitlager ausgebildet sind. Falls die Planetenträgerlager als Gleitlager ausgebildet sind, sind diese vorzugsweise in Umfangsrichtung segmentierte Gleitlager; dabei ist das Lager in über den Umfang des gelagerten Planetenträgers unterteilte Segmente aufgegliedert. Dabei bedeutet "ein in Gleitlagern gelagerter Generator", dass die Rotation des Läufers des Generators in mindestens einem Gleitlager erfolgt; vorzugsweise sind alle Lagerstellen des Läufers des Generators als Gleitlager ausgeführt.

Die Aufgabe wird durch den Einsatz von Gleitlagern im Generator UND im Getriebe bei mittelschnellen Systemen gelöst. Die Erfindung betrifft also insbesondere Systeme, bei denen der Generator zumindest teilweise eine eigenständige Lagerung aufweist (modulare oder halb integrierte Systeme). Bei modularen Systemen ist der Generator in Form einer separat gelagerten Systemkomponente mit dem Getriebe verbunden. Bei vollständig integrierten Systemen weist der Generator keine eigene Lagerung mehr auf, sondern ist vollständig über das Getriebe gelagert. Bei teil- bzw. halb-integrierten Systemen ist der Generator sowohl über das Getriebe als auch über ein oder mehrere eigene Lager gelagert.

Durch die Erfindung, also die Kombination eines gleitgelagerten Generators mit einem gleitgelagerten Getriebe, kann die Schnittstelle zwischen Getriebe und Generator deutlich vereinfacht werden, da keine Service-Möglichkeit mehr vorgehalten werden muss, um ein schadensanfälliges Wälzlager des Generators zu wechseln.

Der Ausfall eines solchen Wälzlagers bedeutet nämlich die Demontage der Rotorblätter mit Herausheben der Welle und des vollständigen, defekten Lagers aus der Gondel der WKA sowie der anschließende Ersatz der defekten Teile. Da diese Teile jedoch im Bereich von 100 Tonnen angesiedelt sind, ist eine derartige Reparatur vor allem bei Offshore-Anlagen mit extrem hohem Aufwand verbunden. Es müssen beispielsweise schwimmende Kran-Plattformen mit entsprechender Tragkraft bereitgestellt werden, womit sehr hohe Kosten verbunden sind. Eine signifikante Verringerung der Schadensanfälligkeit, wie sie die vorliegende Erfindung leistet, stellt somit einen erheblichen Vorteil dar.

Die Erfindung hat folgende Vorteile bzw. bringt folgende synergetische Effekte:
Bei Kompaktantrieben ist zwischen dem Generator und dem Getriebe ein Lager einzusetzen. Dieses Lager nimmt sowohl die Kräfte der Getriebeausgangswelle als auch Teile der Läufer-Lagerkräfte auf.

Die Erfindung basiert auf der Tatsache, dass hydrodynamisch/- statisch betriebene Gleitlager verschleißfrei arbeiten. Indem für das zwischen dem Generator und dem Getriebe eingesetzte Lager ein Gleitlager verwendet wird, wird die Wahrscheinlichkeit eines Lagerdefekts signifikant reduziert. Somit können die Servicefrequenz und die mit einem Serviceeinsatz verbundenen Kosten deutlich reduziert werden. Die Schnittstelle zwischen Getriebe und Generator kann deutlich vereinfacht werden, da keine Service-Möglichkeit mehr vorgehalten werden muss.

Erst in der Kombination der Merkmale mittelschnell, modular bzw. teil-integriert und Gleitlager für beide Hauptkomponenten, Getriebe und Generator, kommt der technische Vorteil der vorliegenden Erfindung voll zum Tragen.

Insbesondere ist es vorteilhaft, bei Antriebssträngen gemäß dem Oberbegriff von Anspruch 1, insbesondere modular aufgebauten, mittelschnellen Antriebssträngen, das Wälzlager, das an der Trennstelle zwischen Generator und Getriebe vorgesehen ist, durch ein Gleitlager zu ersetzen. Diese Trennstelle zwischen Getriebe und Generator kann somit deutlich vereinfacht werden, da keine Service-Möglichkeit mehr vorgehalten werden muss.

In EP 2 508 753 A1 (Siemens; Winergy) 2012-10-10, EP 2 508 754 A1 (Siemens) 2012-10-10, EP 2 508 777 A1 (Siemens) 2012-10-10, EP 2 541 096 A1 (Siemens) 2013-01-02, EP 2 541 058 A1 (Siemens) 2013-01-02 und EP 2 573 386 A1 (Siemens; Winergy) 2013-03-27 sind Antriebssysteme gemäß dem Oberbegriff des Anspruchs 1 beschrieben. Diese Systeme sind besonders gut dafür geeignet, dass sowohl das Getriebe als auch der Generator in Gleitlagern gelagert werden.

Im Folgenden sind mehrere Beispiele von Antriebssystemen gemäß dem Oberbegriff des Anspruchs 1 beschrieben. Diese Systeme sind besonders gut dafür geeignet, dass sowohl das Getriebe als auch der Generator in Gleitlagern gelagert werden.

Triebstrang für eine Windenergieanlage mit einem Getriebe, das ein Getriebegehäuse aufweist und über eine Antriebswelle mit einem Windrotor verbunden oder verbindbar ist, und einem Generator, der ein mit dem Getriebegehäuse fest verbundenes Generatorgehäuse aufweist, in dem wenigstens ein Stator und wenigstens ein Läufer vorgesehen sind, wobei der Läufer mit einer an dem Getriebegehäuse über Lager gelagerten Abtriebswelle des Getriebes gekoppelt ist, die während des Betriebs schneller als die Antriebswelle läuft, dadurch gekennzeichnet, dass der Generator eine koaxial zu der Abtriebswelle des Getriebes angeordnete und an dem Generatorgehäuse über Lager gelagerte Generatorwelle aufweist, die über Verbindungsflansche mit der Abtriebswelle des Getriebes verbunden ist, wobei zwischen den Verbindungsflanschen eine elektrische Isolierung vorgesehen ist, dass zwischen dem Getriebegehäuse und dem Generatorgehäuse eine Labyrinth- oder Spaltdichtung vorgesehen ist, und dass der Reihe nach die Lager, die Labyrinth- oder Spaltdichtung und der Verbindungsflansch an der Abtriebswelle und sich daran anschließend der Verbindungsflansch, der Läufer und das Lager an der Generatorwelle gehalten sind.

Antriebssystem für eine Windkraftanlage mit
- einer zumindest eine Planetenradstufe, die ein Hohlrad, mehrere Planetenräder, einen Planetenträger und ein Sonnenrad aufweist, umfassenden Getriebeeinheit,
- einer der Getriebeeinheit zugeordneten ersten Welle, die einen mit einer Windrotorwelle elastisch verbindbaren Kupplungsflansch aufweist und über den Planetenträger gelagert ist, und
- einem die Getriebeeinheit und eine mit einer zweiten Welle der Getriebeeinheit verbundene Generatoreinheit umgebenden Getriebegehäuse, das eine kardanische umfangssymmetrische oder teilsymmetrische Aufhängung zur Verbindung mit einem tragenden Strukturelement der Windkraftanlage aufweist, wobei die kardanische Aufhängung durch eine das Getriebegehäuse vollumfänglich radial umgebende Ringstütze gebildet ist, die in Umfangsrichtung mehrere im Wesentlichen äquidistant angeordnete Bohrungen aufweist, in die elastische Bolzen eingesetzt sind, die mit einer korrespondierenden Drehmomentstütze am tragenden Strukturelement der Windkraftanlage verbindbar sind, oder dass die kardanische Aufhängung durch zwei das Getriebegehäuse teilumfänglich radial umgebende Ringsegmentstützen gebildet ist, die jeweils in Umfangsrichtung mehrere im Wesentlichen äquidistant angeordnete Bohrungen aufweisen, in die elastische Bolzen eingesetzt sind, die mit korrespondierenden Drehmomentstützen am tragenden Strukturelement der Windkraftanlage verbindbar sind.

Antriebssystem für eine Windkraftanlage mit
- einer zumindest eine Planetenradstufe, die ein Hohlrad, mehrere Planetenräder, einen Planetenträger und ein Sonnenrad aufweist, umfassenden Getriebeeinheit,
- einer der Getriebeeinheit zugeordneten ersten Welle, die einen mit einer Windrotorwelle verbindbaren Kupplungsflansch aufweist und über den Planetenträger gelagert ist,
- einem die Getriebeeinheit und eine mit einer zweiten Welle der Getriebeeinheit verbundene Generatoreinheit umgebenden Getriebegehäuse,
- einen drehfest mit einer Läuferhohlwelle verbundenen Läufer der Generatoreinheit,
- einem generatorseitigen Endabschnitt der zweiten Welle der Getriebeeinheit, der von der Läuferhohlwelle konzentrisch umgeben und mit dieser über eine innerhalb der Läuferhohlwelle angeordnete Kupplung oder Spannverbindung verbunden ist,
- einen zwischen Getriebeeinheit und Generatoreinheit angeordneten Getriebegehäusestutzen, der einen getriebeseitigen Endabschnitt der Läuferhohlwelle konzentrisch umgibt und einen Lagersitz für eine der Läuferhohlwelle zugeordnete Lageranordnung bildet, mittels derer auch die zweite Welle der Getriebeeinheit gelagert ist.

Antriebssystem für eine Windkraftanlage mit
- einer zumindest eine Planetenradstufe, die ein Hohlrad, mehrere Planetenräder, einen Planetenträger und ein Sonnenrad aufweist, umfassenden Getriebeeinheit,
- einer der Getriebeeinheit zugeordneten ersten Welle, die einen mit einer Windrotorwelle verbindbaren Kupplungsflansch aufweist und über den Planetenträger gelagert ist,
- einem die Getriebeeinheit und eine mit einer zweiten Welle der Getriebeeinheit verbundene Generatoreinheit umgebenden Getriebegehäuse,
- einen drehfest mit einer Läuferhohlwelle verbundenen Läufer der Generatoreinheit, wobei die Läuferhohlwelle axial von der zweiten Welle der Getriebeeinheit beabstandet ist,
- einer zwischen der Läuferhohlwelle und der zweiten Welle der Getriebeeinheit angeordneten lösbaren Flanschverbindung, deren getriebeseitiges Ende mit einer Getriebehohlwelle verbunden ist,
- einem generatorseitigen Endabschnitt der zweiten Welle der Getriebeeinheit, der von der Getriebehohlwelle konzentrisch umgeben und mit dieser über eine innerhalb der Getriebehohlwelle angeordnete Kupplung oder Spannverbindung verbunden ist,
- einen zwischen Getriebeeinheit und Generatoreinheit angeordneten Getriebegehäusestutzen, der einen Lagersitz für eine der zweiten Welle der Getriebeeinheit zugeordnete Lageranordnung bildet, mittels derer auch die Läuferhohlwelle gelagert ist, wobei die lösbare Flanschverbindung elektrisch isolierend ist und der Getriebegehäusestutzen einen getriebeseitigen Endabschnitt der Getriebehohlwelle konzentrisch umgibt.

Antriebssystem für eine Windkraftanlage mit
- einer zumindest eine Planetenradstufe, die ein Hohlrad, mehrere Planetenräder, einen Planetenträger und ein Sonnenrad aufweist, umfassenden Getriebeeinheit,
- einer der Getriebeeinheit zugeordneten ersten Welle, die einen mit einer Windrotorwelle verbindbaren Kupplungsflansch aufweist und über den Planetenträger gelagert ist,
- einem die Getriebeeinheit und eine mit einer zweiten Welle der Getriebeeinheit verbundene Generatoreinheit umgebenden Getriebegehäuse,
- einem drehfest mit einer Läuferhohlwelle verbundenen Läufer der Generatoreinheit,
- einem zwischen Getriebeeinheit und Generatoreinheit angeordneten Getriebegehäusestutzen mit einem hohlzylindrischen Fortsatz, der einen generatorseitigen Endabschnitt der zweiten Welle der Getriebeeinheit konzentrisch umgibt und einen Lagersitz für eine radial zwischen der zweiten Welle und dem hohlzylindrischen Fortsatz angeordnete Lageranordnung bildet,
- zumindest einem äußeren Lagerelement der Lageranordnung, das mit dem hohlzylindrischen Fortsatz verbunden ist, wobei mittels der Lageranordnung sowohl die zweite Welle der Getriebeeinheit als auch die Läuferhohlwelle gelagert ist, wobei das Antriebssystem eine radial zwischen der zweiten Welle der Getriebeeinheit und der Läuferhohlwelle angeordnete Kupplung oder Spannverbindung umfasst und der Läufer und die Läuferhohlwelle den hohlzylindrischen Fortsatz konzentrisch umgeben.

Antriebssystem für eine Windkraftanlage mit
- einer zumindest eine Planetenradstufe, die ein Hohlrad, mehrere Planetenräder, einen Planetenträger und ein Sonnenrad aufweist, umfassenden Getriebeeinheit,
- einer der Getriebeeinheit zugeordneten ersten Welle, die einen mit einer Windrotorwelle verbindbaren Kupplungsflansch aufweist und über den Planetenträger gelagert ist,
- einer mit der Getriebeeinheit verbundene Generatoreinheit,
- einer der Getriebeeinheit zugeordneten, als Hohlwelle ausgestalteten zweiten Welle, die mit ihrem getriebeseitigen Endabschnitt einen generatorseitigen Endabschnitt einer Sonnenradwelle konzentrisch umgibt und dort mit dieser drehfest verbunden ist,
- einen drehfest mit einer Läuferhohlwelle verbundenen Läufer der Generatoreinheit,
- einer drehfest mit der Läuferhohlwelle verbundenen Steckwelle, die mit ihrem getriebeseitigen Endabschnitt von der zweiten Welle der Getriebeeinheit konzentrisch umgeben und dort mit dieser drehfest verbunden ist,
- einen zwischen Getriebeeinheit und Generatoreinheit angeordneten Getriebegehäusestutzen, der die zweite Welle der Getriebeeinheit konzentrisch umgibt und einen Lagersitz für eine der zweiten Welle zugeordnete Lageranordnung bildet, mittels derer auch die Sonnenradwelle gelagert ist,
- zwei jeweils an einer Generatorstirnseite angeordneten Gehäusedeckel, die Lagersitze für ein erstes und ein zweites Lager der Läuferhohlwelle bilden.

Vorteilhafte Ausgestaltungen und Weiterbildungen der Erfindung sind in den abhängigen Ansprüchen angegeben.

Gemäß einer bevorzugten Ausgestaltung der Erfindung handelt es sich um ein modulares System, bei dem der Generator eine eigenständige, von der Getriebelagerung unabhängige Lagerung aufweist. Dadurch wird der Vorteil erzielt, dass Getriebe und Generator voneinander unabhängig repariert bzw. demontiert werden können.

Gemäß einer bevorzugten Ausgestaltung der Erfindung handelt es sich um ein integriertes System, bei dem ein Getriebe und ein Generator integriert sind: bei integrierten Systemen weist der Generator keine eigene Lagerung mehr auf, sondern ist zumindest teilweise über das Getriebe gelagert. WKA mit einem integrierten Antriebsstrangs, d.h. bei denen Getriebe und Generator integriert sind, bieten gegenüber einem aufgelösten Antriebsstrang Vorteile wie z.B. einen geringeren Raumbedarf.

Gemäß einer bevorzugten Ausgestaltung der Erfindung ist das Übersetzungsgetriebe ein zweistufiges Getriebe, insbesondere ein Planetengetriebe bestehend aus zwei Planetenstufen. WKA mit einem zweistufigen Getriebe werden allgemein als mittelschnelle Systeme, WKA mit drei oder mehr Getriebestufen als schnelle Systeme bezeichnet. Mittelschnelle Systeme arbeiten vorzugsweise mit einem zweistufigen Planetengetriebe und verzichten auf eine schnelldrehende Stirnradstufe.

Gemäß einer bevorzugten Ausgestaltung der Erfindung weist das Antriebssystem eine Trennfuge im Gehäuse zur axialen Trennung des Getriebes von dem Generator auf. Diese Trennstelle dient der axialen Trennbarkeit beider Komponenten, um im Falle eines Schadens im Antriebssystem den Generator in axialer Richtung vom Getriebe trennen zu können.

Gemäß einer bevorzugten Ausgestaltung der Erfindung können die Gleitlager aus metallischen und/oder nichtmetallischen Lagerwerkstoffen bestehen. Der Aufbau der Gleitlager kann ein- und mehrschichtig sein. Dadurch wird der Vorteil erzielt, dass die Eigenschaften der Gleitlager innerhalb weiter Grenzen an die jeweiligen Randbedingungen angepasst werden können.

Gemäß einer bevorzugten Ausgestaltung der Erfindung ist der Lagerwerkstoff mit einer weiteren Verschleißschutzschicht beschichtet. Dadurch wird der Vorteil erzielt, dass die Eigenschaften der Gleitlager innerhalb weiter Grenzen an die jeweiligen Randbedingungen angepasst werden können.

Gemäß einer bevorzugten Ausgestaltung der Erfindung umfassen die Gleitlager ein beidseitig wirkendes Axialgleitlager. Dadurch wird der Vorteil erzielt, dass große Axialkräfte in beiden axialen Richtungen übertragen werden können.

Gemäß einer bevorzugten Ausgestaltung der Erfindung umfassen die Gleitlager ein Gleitlager mit und ohne Segmentierung. Dadurch wird der Vorteil erzielt, dass Gleitlager für verschieden große Lager-Durchmesser bereitgestellt werden können.

Gemäß einer bevorzugten Ausgestaltung der Erfindung umfassen die Gleitlager ein Gleitlager mit einstellbarem Axial-und/oder Radialspiel. Dadurch wird der Vorteil erzielt, dass die Laufeigenschaften der Gleitlager innerhalb weiter Grenzen an die jeweiligen Randbedingungen angepasst werden können.

Gemäß einer bevorzugten Ausgestaltung der Erfindung ist die Planetenträgerlagerung ebenfalls als Gleitlagerung ausgeführt. Dadurch wird der Vorteil erzielt, dass die Vorteile von Gleitlagern auch für die Planetenträgerlagerung nutzbar sind. Es ist vorteilhaft, wenn die Planetenträgerlager, die relativ große Durchmesser aufweisen, Gleitlager mit Segmentierung sind.

Gemäß einer bevorzugten Ausgestaltung der Erfindung erfolgt die Schmierung der Gleitlagerungen mittels Nieder-, Hochdruck oder Gravitation.

Gemäß einer bevorzugten Ausgestaltung der Erfindung sind die Gleitlager geometrisch so modifiziert, dass sie der Einbau- und Beanspruchungssituation angepasst sind.

Im Folgenden wird die Erfindung anhand mehrerer Ausführungsbeispiele unter Zuhilfenahme der Zeichnungen erläutert. Es zeigt jeweils schematisch und nicht maßstabsgetreu
- Fig. 1: einen erfindungsgemäßen Triebstrang mit einer Läuferwelle der Generatoreinheit, die an ihren beiden Enden gelagert ist;
- Fig. 2: einen ähnlichen wie den in Fig. 1 dargestellten Triebstrang, wobei die Abtriebswelle der Getriebeeinheit mittels einer Flanschverbindung mit der Läuferwelle der Generatoreinheit verbunden ist;
- Fig. 3: einen erfindungsgemäßen Triebstrang mit einer Lageranordnung zwischen der Getriebe- und der Generatoreinheit; und
- Fig. 4: einen erfindungsgemäßen Triebstrang mit einer zentral gelagerten Läuferwelle der Generatoreinheit.

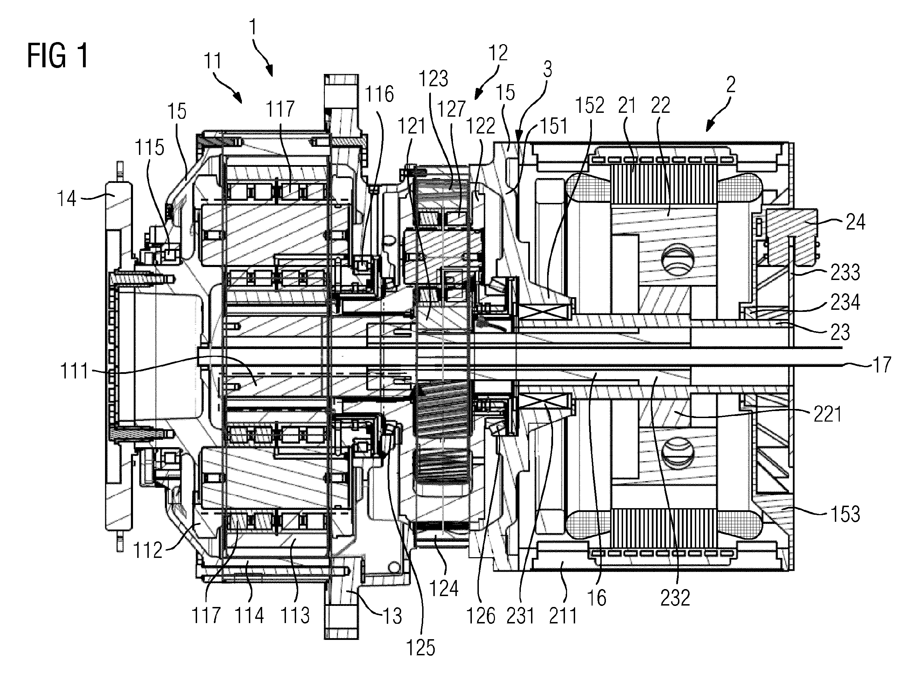

Fig. 1 stellt ein Antriebssystem für eine WKA dar, welches eine Getriebeeinheit 1 mit einer ersten 11 und einer zweiten Planetenradstufe 12 in koaxialer Bauform aufweist. Dabei umfasst jede Planetenradstufe 11, 12 jeweils ein Hohlrad 114, 124, mehrere Planetenräder 113, 123, einen Planetenträger 112, 122 und ein Sonnenrad 111, 121. "Koaxiale Bauform" bedeutet, dass die Rotationsachsen der Sonnenräder 111, 121 beider Planetenradstufen 11, 12 zusammenfallen.

Die Getriebeeinheit 1 ist über eine Abtriebswelle 16 der Getriebeeinheit 1 mit einer Generatoreinheit 2 verbunden und gemeinsam mit dieser in einem Getriebegehäuse 15 angeordnet. Zwischen der Getriebeeinheit 1 und der Generatoreinheit 2 weist das Getriebegehäuse 15 eine Trennfuge 3 auf, entlang der die Getriebeeinheit 1 und die Generatoreinheit 2 getrennt werden können. Der Getriebeeinheit 1 ist eine an den Planetenträger 112 der ersten Planetenradstufe 11 angeformte Antriebswelle zugeordnet, die einen mit einer Windrotorwelle verbindbaren Kupplungsflansch 14 aufweist und über den Planetenträger 112 der ersten Planetenradstufe 11 gelagert ist. Dem Planetenträger 112 der ersten Planetenradstufe 11 sind zwei zwischen Planetenträgerwangen und Getriebegehäuse 15 angeordnete Lager 115 und 116 zugeordnet, die ein erstes und ein zweites Hauptlager der Getriebeeinheit 1 darstellen. In entsprechender Weise ist der Planetenträger 122 der zweiten Planetenradstufe 12 durch zwei zwischen Planetenträgerwangen und Getriebegehäuse 15 angeordnete Lager 125 und 126 gelagert.

Das Getriebegehäuse 15 weist eine vollkardanische Aufhängung 13 zur Verbindung mit einem tragenden Strukturelement der WKA auf. Dieses tragende Strukturelement ist beispielsweise ein Rahmen oder eine Gondel der WKA.

Die Generatoreinheit 2 umfasst einen Stator 21 und einen drehfest mit einer Läuferhohlwelle 23 verbundenen Läufer 22. Die Läuferhohlwelle 23 umgibt einen generatorseitigen Endabschnitt der Abtriebswelle 16 konzentrisch und ist mit diesem über eine innerhalb der Läuferhohlwelle 23 angeordnete Kupplung oder Spannverbindung 232 verbunden. Zwischen Getriebeeinheit 1 und Generatoreinheit 2 ist ein Getriebegehäusestutzen 152 angeordnet. Dieser Gehäusestutzen 152 umgibt einen getriebeseitigen Endabschnitt der Läuferhohlwelle 23 konzentrisch und bildet einen Lagersitz für eine der Läuferhohlwelle 23 zugeordnete Lageranordnung 231. In der Lagerstelle 231 werden u.a. die Axialkräfte der Abtriebswelle 16 aufgenommen, sofern diese auftreten.

Innerhalb der Abtriebswelle 16 und der Läuferhohlwelle 23 ist im vorliegenden Ausführungsbeispiel ein Pitch-Rohr 17 angeordnet, das sich axial über das gesamte Antriebssystem erstreckt. Durch das Pitch-Rohr 17 können Energie- und Signalleitungen vom generatorseitigen Ende des Getriebegehäuses 15 in die Nabe des Windrotors geführt werden, insbesondere zur Versorgung von in der Nabe angeordneten Pitchantrieben zur Verstellung des Anstellwinkels (engl.: pitch) von Windrotorblättern.

Die Läuferhohlwelle 23 kann beispielsweise einen in Richtung von der Generatoreinheit 2 zur Getriebeeinheit 1 stufenförmig wachsenden Außendurchmesser aufweisen. Damit die Läuferhohlwelle 23 auch in diesem Fall ohne Demontage des Läufers 22 der Generatoreinheit 2 ausgebaut werden kann, ist im vorliegenden Ausführungsbeispiel zwischen der Läuferhohlwelle 23 und dem Läufer 22 ein Innenspannsatz 221 vorgesehen. Der Innenspannsatz 221 weist dabei einen größeren Außendurchmesser als die Läuferhohlwelle 23 auf.

Vorteilhafterweise ist ein Außendurchmesser des Sonnenrads 121 der zweiten Planetenradstufe 12 kleiner als ein Innendurchmesser der Läuferhohlwelle 23. Damit können die Abtriebswelle 16 und die Läuferhohlwelle 23 durch eine Öffnung an einem von der Getriebeeinheit 1 abgewandt angeordneten Gehäusedeckel 153 des Getriebegehäuses 15 und durch eine zur Läuferachse konzentrische Öffnung am Läufer 22 eingesetzt werden.

Entsprechend Figur 1 sind die Kupplung oder Spannverbindung 232 einerseits und der Läufer 22 der Generatoreinheit 2 koaxial zueinander ausgerichtet und weisen lediglich einen radialen Abstand zueinander auf. Dabei ist die Abtriebswelle 16 der Getriebeeinheit 1 etwa zur Hälfte von der Läuferwohlwelle 23 umgeben. Die am Gehäusestutzen 152 angeordnete Lageranordnung 231 der Läuferhohlwelle 23 ist vorteilhaft circa axial mittig zwischen der Kupplung oder Spannverbindung 232 einerseits und dem Sonnenrad 121 der zweiten Planetenradstufe 12 angeordnet.

Die Lageranordnung 231 der Läuferhohlwelle 23 am Gehäusestutzen 152 umfasst vorzugsweise ein Gleitlager, welches in der Lage ist, Radial- und Axialkräfte aufzunehmen. Die Axialkräfte können dabei in beiden Achsrichtungen aufgenommen werden. Darüber hinaus sind die Läuferhohlwelle 23 und die Abtriebswelle 16 der Getriebeeinheit 1 entsprechend einer besonders bevorzugten Ausführungsform ausschließlich mittels der Lageranordnung 231 am Gehäusestutzen 152 gelagert. Ein in Figur 1 dargestelltes hinteres Läuferhohlwellenlager 234 an einer von der Getriebeeinheit 1 abgewandten Stirnseite der Generatoreinheit 2 ist also nicht zwingend erforderlich und kann grundsätzlich entfallen. "Vorne" und "Hinten" ist auf die Windrichtung bezogen, d.h. "Vorne" ist Luv-seitig und "Hinten" ist Lee-seitig.

An der Läuferhohlwelle 23 ist im vorliegenden Ausführungsbeispiel an der von der Getriebeeinheit 1 abgewandten Stirnseite der Generatoreinheit 2 eine Bremsscheibe 233 einer Feststellbremse drehfest montiert. Die Bremsscheibe 233 ist damit für Wartungszwecke einfach zugänglich. Ein der Bremsscheibe 233 zugeordneter Bremssattel 24 ist an dem von der Getriebeeinheit 1 abgewandt angeordneten Gehäusedeckel 153 befestigt.

Die Lager 115, 116, 125, 126 der Planetenträger 112, 122 sind Wälzlager. Alternativ können sie aber auch Gleitlager sein. Die Lager 117, 127 der in den Planetenträgern 112, 122 gelagerten Planetenräder 113, 123 sind Gleitlager. Die Lager 231, 234 der Läuferhohlwelle 23 sind Gleitlager.

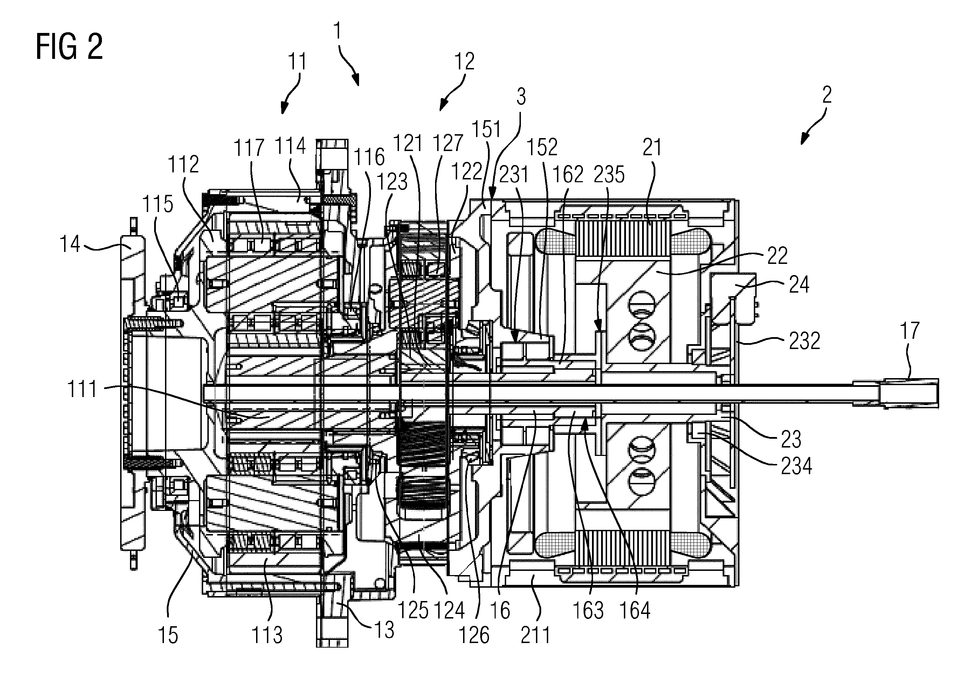

Fig. 2 stellt ein Antriebssystem für eine WKA dar, das dem in Fig. 1 gezeigten Antriebssystem weitgehend ähnelt. Allerdings unterscheiden sich beide Antriebssysteme darin, wie die Läuferwelle des Generators gelagert ist, sowie in der Drehanbindung zwischen der Getriebeabtriebswelle 16 und der Läuferhohlwelle 23.

Bei dem in Fig. 2 gezeigten Antriebssystem umfasst die Generatoreinheit 2 einen Stator 21 und einen drehfest mit einer Läuferhohlwelle 23 verbundenen Läufer 22. Die Läuferhohlwelle 23 ist axial von der Abtriebswelle 16 der Getriebeeinheit 1 beabstandet angeordnet bzw. schließt sich axial an diese an. Zwischen der Läuferhohlwelle 23 und der Abtriebswelle 16 der Getriebeeinheit 1 ist eine elektrisch isolierende Flanschverbindung 235 angeordnet, deren getriebeseitiges Ende mit einer Hohlwelle 162 verbunden ist. Ein generatorseitiger Endabschnitt der Abtriebswelle 16 der Getriebeeinheit 1 ist von der Hohlwelle 162 konzentrisch umgeben und mit dieser über eine innerhalb der Hohlwelle 162 angeordnete Kupplung oder Spannverbindung 163 verbunden. Zwischen Getriebeeinheit 1 und Generatoreinheit 2 ist ein Getriebegehäusestutzen 152 angeordnet. Dieser Gehäusestutzen 152 umgibt einen getriebeseitigen Endabschnitt der Getriebehohlwelle 162 konzentrisch und bildet einen Lagersitz für eine der Abtriebswelle 16 der Getriebeeinheit 1 zugeordnete Lageranordnung 231. Mittels dieser Lageranordnung 231 ist auch die Abtriebswelle 16 gelagert. In der Lagerstelle 231 werden evtl. Axialkräfte in beiden Richtungen aufgenommen. Innerhalb der Abtriebswelle 16 und der Läuferhohlwelle 23 ist im vorliegenden Ausführungsbeispiel ein Pitch-Rohr 17 angeordnet, das sich axial über das gesamte Antriebssystem erstreckt.

Entsprechend der Schnittdarstellung in Figur 2 ist ein generatorseitiges Ende der Flanschverbindung 235 an die Läuferhohlwelle 23 angeformt. An einem generatorseitigen Ende der Hohlwelle 162 ist eine Steckverzahnung 164 zu Kopplung von Abtriebswelle 16 und Hohlwelle 162 angeordnet. Des Weiteren ist die Abtriebswelle 16 der Getriebeeinheit 1 axial im Wesentlichen zur Hälfte von der Getriebehohlwelle 162 umgeben. Die am Getriebegehäusestutzen 152 angeordnete Lageranordnung 231 ist dabei axial etwa mittig auf die mit dem Sonnenrad 121 der zweiten Planetenradstufe 12 verbundene Abtriebswelle 16 der Getriebeeinheit 1 ausgerichtet.

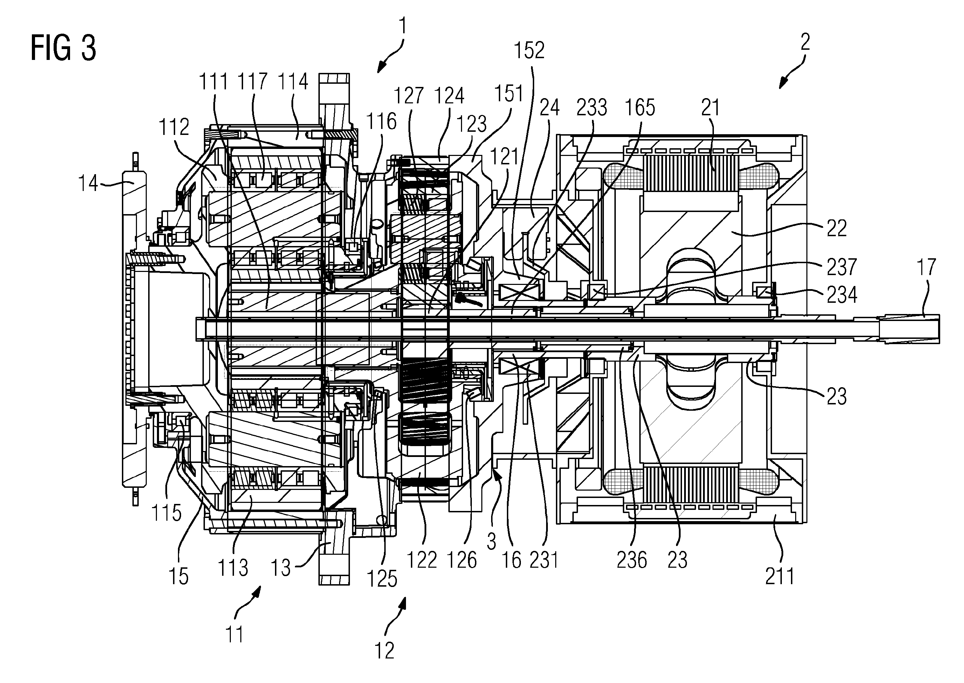

Figur 3 zeigt ein Antriebssystem für eine Windkraftanlage, welches eine Getriebeeinheit 1 mit einer ersten 11 und zweiten Planetenradstufe 12 in koaxialer Bauform aufweist. Dabei umfasst jede Planetenradstufe 11, 12 jeweils ein Hohlrad 114, 124, mehrere Planetenräder 113, 123, einen Planetenträger 112, 122 und ein Sonnenrad 111, 121.

Die Getriebeeinheit 1 ist über eine als Hohlwelle ausgestaltete Abtriebswelle 16 der Getriebeeinheit 1 mit einer Generatoreinheit 2 verbunden und in einem Getriebegehäuse 15 angeordnet. Zwischen der Getriebeeinheit 1 und der Generatoreinheit 2 weist das Getriebegehäuse 15 eine Trennfuge 3 auf, entlang der die Getriebeeinheit 1 und die Generatoreinheit 2 getrennt werden können. Die Abtriebswelle 16 umgibt mit ihrem getriebeseitigen Endabschnitt einen generatorseitigen Endabschnitt einer Sonnenradwelle 165 der zweiten Planetenradstufe 12 konzentrisch und ist dort mit dieser drehfest verbunden. Dabei sind die Abtriebswelle 16 und die Sonnenradwelle 165 beispielsweise über eine innerhalb der Abtriebswelle 16 angeordnete Kupplung oder Spannverbindung miteinander verbunden. Dies kann insbesondere mittels einer Kurzverzahnung, Bogenverzahnung, Polygonverbindung, Passfederverbindung, elastischen Bolzenkupplung oder eines Innen-Spannsatzes erfolgen.

Die Generatoreinheit 2 umfasst einen Stator 21 und einen drehfest mit einer Läuferhohlwelle 23 verbundenen Läufer 22. Die Läuferhohlwelle 23 ist axial von der Abtriebswelle 16 der Getriebeeinheit 1 beabstandet angeordnet bzw. schließt sich axial an diese an. Darüber hinaus ist die Läuferhohlwelle 23 mit einer Steckwelle 236 drehfest verbunden, die an ihrem getriebeseitigen Endabschnitt von der Abtriebswelle 16 der Getriebeeinheit 1 konzentrisch umgeben und dort mit dieser drehfest verbunden ist. Dabei sind die Abtriebswelle 16 und die Steckwelle 236 beispielsweise über eine innerhalb der Abtriebswelle 16 angeordnete Kupplung oder Spannverbindung miteinander verbunden. Dies kann insbesondere mittels einer Kurzverzahnung, Bogenverzahnung, Polygonverbindung, Passfederverbindung, elastischen Bolzenkupplung oder eines Innen-Spannsatzes erfolgen.

Bei der in Fig. 3 dargestellten Variante eines Antriebssystems mit kurzer Steckwelle ist die Läuferhohlwelle 23 mit der Steckwelle 236 an einem getriebeseitigen Ende der Läuferhohlwelle 23 über eine innerhalb der Läuferhohlwelle 23 angeordnete Kupplung oder Spannverbindung verbunden. Auch in diesem Fall kann dies mittels einer Kurzverzahnung, Bogenverzahnung, Polygonverbindung, Passfederverbindung, elastischen Bolzenkupplung oder eines Innen-Spannsatzes erfolgen.

Bei dem in Fig. 3 dargestellten Antriebssystem ist zwischen Getriebeeinheit 1 und Generatoreinheit 2 ein Getriebegehäusestutzen 152 angeordnet, der die Abtriebswelle 16 konzentrisch umgibt und einen Lagersitz für eine der Abtriebswelle 16 zugeordnete Lageranordnung 231 bildet. Mittels dieser Lageranordnung 231 ist auch die Sonnenradwelle 165 gelagert. Dabei umgibt der Getriebegehäusestutzen 152 einen generatorseitigen Endabschnitt der Sonnenradwelle 165 konzentrisch. Die Lageranordnung 231 der Abtriebswelle 16 am Gehäusestutzen 152 umfasst vorzugsweise ein Gleitlager, welches Kräfte in beiden Achsrichtungen und in radialer Richtung aufnehmen kann. Innerhalb der Abtriebswelle 16 und der Läuferhohlwelle 23 ist im vorliegenden Ausführungsbeispiel ein Pitch-Rohr 17 angeordnet, das sich axial über das gesamte Antriebssystem erstreckt.

Zwei jeweils an einer Generatorstirnseite angeordnete Gehäusedeckel bilden Lagersitze für ein erstes Lager 237 und ein zweites Lager 234 der Läuferhohlwelle 23. Der Lagersitz für das erste Lager 237 der Läuferhohlwelle 23 ist dabei durch einen der Getriebeeinheit 1 zugewandten Gehäusedeckel an einer ersten Generatorstirnseite gebildet, während der Lagersitz für das zweite Lager 234 der Läuferhohlwelle 23 durch einen von der Getriebeeinheit 1 abgewandten Gehäusedeckel an zweiten Generatorstirnseite gebildet ist. Die Lagerstellen 234 und 237 sind bevorzugt als Gleitlager ausgebildet.

Der Getriebeeinheit 1 ist eine an den Planetenträger 112 der ersten Planetenradstufe 11 angeformte Antriebswelle zugeordnet, die einen mit einer Läuferwelle verbindbaren Kupplungsflansch 14 aufweist und über den Planetenträger 112 der ersten Planetenradstufe 11 gelagert ist. Dem Planetenträger 112 der ersten Planetenradstufe 11 sind zwei zwischen Planetenträgerwangen und Getriebegehäuse 15 angeordnete Lager 115 und 116 zugeordnet, die ein erstes und ein zweites Hauptlager der Getriebeeinheit 1 darstellen. In entsprechender Weise ist der Planetenträger 122 der zweiten Planetenradstufe 12 durch zwei zwischen Planetenträgerwangen und Getriebegehäuse 15 angeordnete Lager 125 und 126 gelagert.

Der die Lageranordnung 231 der Abtriebswelle 16 konzentrisch umgebende Gehäusestutzen 152 ist im vorliegenden Ausführungsbeispiel an den zwischen Getriebeeinheit 1 und Generatoreinheit 2 angeordneten Gehäusezwischenflansch 151 angeformt. Am Gehäusezwischenflansch 151 ist sowohl ein Statormantel 211 der Generatoreinheit 2 als auch das Hohlrad 124 der zweiten Planetenradstufe 12 montiert. Zusätzlich weist der Gehäusezwischenflansch 151 einen Lagersitz für ein generatorseitiges Planetenträgerlager 126 der zweiten Planetenradstufe 12 auf.

Die Lager 115, 116, 125, 126 der Planetenträger 112, 122 sind Wälzlager. Alternativ können sie aber auch Gleitlager sein. Die Lager 117, 127 der in den Planetenträgern 112, 122 gelagerten Planetenräder 113, 123 sind Gleitlager. Die Lager 234, 237 der Läuferhohlwelle 23 sind Gleitlager. Die Lageranordnung 231 ist ein Gleitlager.

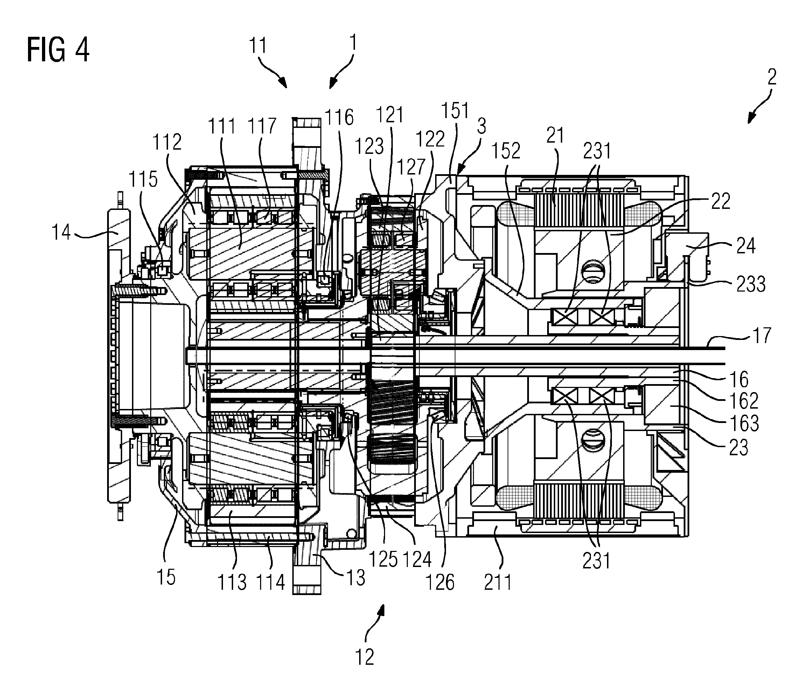

Fig. 4 zeigt ein Antriebssystem für eine Windkraftanlage, welches eine Getriebeeinheit 1 mit einer ersten 11 und zweiten Planetenradstufe 12 in koaxialer Bauform aufweist. Dabei umfasst jede Planetenradstufe 11, 12 jeweils ein Hohlrad 114, 124, mehrere Planetenräder 113, 123, einen Planetenträger 112, 122 und ein Sonnenrad 111, 121. Die Getriebeeinheit 1 ist über eine Abtriebswelle 16 der Getriebeeinheit 1 mit einer Generatoreinheit 2 verbunden und gemeinsam mit dieser in einem Getriebegehäuse 15 angeordnet. Zwischen der Getriebeeinheit 1 und der Generatoreinheit 2 weist das Getriebegehäuse 15 eine Trennfuge 3 auf, entlang der die Getriebeeinheit 1 und die Generatoreinheit 2 getrennt werden können.

Der Getriebeeinheit 1 ist eine an den Planetenträger 112 der ersten Planetenradstufe 11 angeformte Antriebswelle zugeordnet, die einen mit einer Windrotorwelle verbindbaren Kupplungsflansch 14 aufweist und über den Planetenträger 112 der ersten Planetenradstufe 11 gelagert ist. Dem Planetenträger 112 der ersten Planetenradstufe 11 sind zwei zwischen Planetenträgerwangen und Getriebegehäuse 15 angeordnete Lager 115 und 116 zugeordnet, die ein erstes und ein zweites Hauptlager der Getriebeeinheit 1 darstellen. In entsprechender Weise ist der Planetenträger 122 der zweiten Planetenradstufe 12 durch zwei zwischen Planetenträgerwangen und Getriebegehäuse 15 angeordnete Lager 125 und 126 gelagert.

Die Generatoreinheit 2 umfasst einen Stator 21 und einen drehfest mit einer Läuferhohlwelle 23 verbundenen Läufer 22. Radial zwischen der Abtriebswelle 16 der Getriebeeinheit 1 und der Läuferhohlwelle 23 ist eine Kupplung, Steckverzahnung oder Spannverbindung 163 angeordnet. Darüber hinaus ist zwischen Getriebeeinheit 1 und Generatoreinheit 2 ein Getriebegehäusestutzen 152 mit einem hohlzylindrischen Fortsatz angeordnet. Der hohlzylindrische Fortsatz umgibt einen generatorseitigen Endabschnitt der Abtriebswelle 16 konzentrisch und bildet einen Lagersitz für eine radial zwischen der Abtriebswelle 16 und dem hohlzylindrischen Fortsatz angeordnete Lageranordnung 231. Es ist dabei unerheblich, ob der Lagersatz 231 innerhalb oder außerhalb des hohlzylindrischen Fortsatzes liegt. Der hohlzylindrische Fortsatz ist wiederum von Läufer 22 und Läuferhohlwelle 23 konzentrisch umgeben. Im vorliegenden Ausführungsbeispiel sind zwei äußere Lagerelemente der Lageranordnung 231 mit dem hohlzylindrischen Fortsatz verbunden.

Ein generatorseitiger Endabschnitt der Abtriebswelle 16 der Getriebeeinheit 1 ist von einer Getriebehohlwelle 162 konzentrisch umgeben und mit dieser drehfest verbunden. Mit dieser Getriebehohlwelle 162 sind zwei innere Lagerelemente der Lageranordnung 231 verbunden. Somit ist mittels der Lageranordnung 231 sowohl die Abtriebswelle 16 der Getriebeeinheit 1 als auch die Läuferhohlwelle 23 gelagert. Dabei ist die im hohlzylindrischen Fortsatz des Getriebegehäusestutzens 152 angeordnete Lageranordnung 231 im vorliegenden Ausführungsbeispiel axial mittig auf den Läufer 22 der Generatoreinheit 2 ausgerichtet. Darüber hinaus ist innerhalb der Abtriebswelle 16 und der Läuferhohlwelle 23 ein Pitch-Rohr 17 angeordnet, das sich axial über das gesamte Antriebssystem erstreckt.

Weiterhin ist eine Ausführung möglich, bei der radiale Aufbau von innen nach außen wie folgt ist: Abtriebswelle 16, Getriebegehäusestutzen 152, Lageranordnung 231, Läuferhohlwelle 23, d.h. die Lager 231 sitzen radial außen auf dem zylindrischen Fortsatz des Getriebegehäusestutzens 152.

Entsprechend Figur 4 ist die Abtriebswelle 16 der Getriebeeinheit 1 axial etwa zur Hälfte von der Generatorhohlwelle 162 umgeben. Die Lageranordnung 231 der Abtriebswelle 16 innerhalb des hohlzylindrischen Fortsatzes des Gehäusestutzens 152 umfasst vorzugsweise ein Gleitlager, welches die Kräfte in beiden Achsrichtungen und in radialer Richtung aufnimmt. Darüber hinaus sind die Läuferhohlwelle 23 und die Abtriebswelle 16 der Getriebeeinheit 1 entsprechend einer besonders bevorzugten Ausführungsform ausschließlich mittels der Lageranordnung 231 am Gehäusestutzen 152 gelagert. Ein hinteres Läuferhohlwellenlager an der Läuferhohlwelle 23 an einer von der Getriebeeinheit 1 abgewandten Stirnseite der Generatoreinheit 2 kann also entfallen.

An der Läuferhohlwelle 23 ist im vorliegenden Ausführungsbeispiel an der von der Getriebeeinheit 1 abgewandten Stirnseite der Generatoreinheit 2 eine Bremsscheibe 233 drehfest montiert. Die Bremsscheibe 233 ist damit für Wartungszwecke einfach zugänglich. Ein der Bremsscheibe 233 zugeordneter Bremssattel 24 ist an dem von der Getriebeeinheit 1 abgewandt angeordneten Gehäusedeckel befestigt.

Die Getriebehohlwelle 162 kann mit der Abtriebswelle 16 der Getriebeeinheit 1 durch eine Zahnkupplung mit Kurz- oder Bogenverzahnung verbunden sein. Alternativ dazu kann die Getriebehohlwelle 162 mit der Abtriebswelle 16 der Getriebeeinheit 1 auch durch einen Innenspannsatz oder Flansch verbunden sein. Der Innenspannsatz umfasst dabei zumindest jeweils einen Außenring und einen Innenring, die zueinander korrespondierende konische Kontaktflächen aufweisen und mittels mehrerer sich axial erstreckender Spannschrauben gegeneinander verspannt werden können. Durch Verspannung des zumindest einen Außenrings und des zumindest einen Innenrings können entsprechend einer bevorzugten Ausführungsform sowohl die Abtriebswelle 16 der Getriebeeinheit 1 und die Getriebehohlwelle 162 als auch die Getriebehohlwelle 162 und die Läuferhohlwelle 23 miteinander verbunden werden, beispielsweise kraftschlüssig. Die Getriebehohlwelle 162 kann beispielsweise durch eine Verspannung des Außen- und Innenrings aufgeweitet werden. Dies führt dann zu einer kraftschlüssigen Verbindung zwischen Getriebehohlwelle 162 und Läuferhohlwelle 23. Die Läuferhohlwelle 23 kann beispielsweise auch mittels einer Passfederverbindung, die axial auf den Innenspannsatz ausgerichtet ist, mit der Getriebehohlwelle 162 verbunden werden.

Alternativ zu einer Zahnkupplung oder zu einem Innenspannsatz kann die Getriebehohlwelle 162 mit der Abtriebswelle 16 der Getriebeeinheit 1 durch einen Außenspannsatz verbunden sein. Vorteilhafterweise ist bei Verwendung eines Außenspannsatzes am generatorseitigen Endabschnitt der Abtriebswelle 16 der Getriebeeinheit 1 ein Flansch vorgesehen. Über den Außenspannsatz kann auch die Läuferwelle 23 mit der Getriebehohlwelle 162 bzw. Abtriebswelle 16 verbunden werden.

Der die Lageranordnung 231 der Abtriebswelle 16 konzentrisch umgebende hohlzylindrische Fortsatz des Gehäusestutzens 152 ist im vorliegenden Ausführungsbeispiel an einen zwischen Getriebeeinheit 1 und Generatoreinheit 2 angeordneten Gehäusezwischenflansch 151 angeformt. Alternativ kann die Lageranordnung 231 den hohlzylindrischen Fortsatz des Gehäusestutzens 152 umgeben. Am Gehäusezwischenflansch 151 ist sowohl ein Statormantel 211 der Generatoreinheit 2 als auch das Hohlrad 124 der zweiten Planetenradstufe 12 montiert. Zusätzlich weist der Gehäusezwischenflansch 151 einen Lagersitz für ein generatorseitiges Planetenträgerlager 126 der zweiten Planetenradstufe 12 auf.

Die Lager 115, 116, 125, 126 der Planetenträger 112, 122 sind Wälzlager. Alternativ können sie aber auch Gleitlager sein. Die Lager 117, 127 der in den Planetenträgern 112, 122 gelagerten Planetenräder 113, 123 sind Gleitlager. Die Lageranordnung 231 zur Lagerung der Läuferhohlwelle 23 ist ein Gleitlager.

## Patentansprüche

1. Antriebssystem einer Windkraftanlage, umfassend ein mit einer Windrotorwelle verbindbares Übersetzungsgetriebe (1), insbesondere mit einer oder mehreren Planetengetriebestufen (11, 12), und einen dem Getriebe (1) nachgeschalteten Generator (2),
**dadurch gekennzeichnet, dass** sowohl das Getriebe (1) als auch der Generator (2) in Gleitlagern (117, 127, 231, 234, 237) gelagert sind.

2. Antriebssystem nach Anspruch 1, wobei der Generator (2) eine eigenständige, von einer Lagerung des Getriebes (1) unabhängige Lagerung aufweist.

3. Antriebssystem nach Anspruch 1, wobei es sich um ein integriertes System aus Getriebe (1) und Generator (2) handelt, bei dem der Generator (2) zumindest teilweise über eine Lagerung des Getriebes (1) gelagert ist.

4. Antriebssystem nach einem der vorhergehenden Ansprüche, wobei es sich um ein mittelschnelles System mit zwei Getriebestufen (11, 12), insbesondere zwei Planetengetriebestufen, handelt.

5. Antriebssystem nach einem der vorhergehenden Ansprüche, wobei die Planetenradlager (117, 127) als Gleitlager ausgeführt sind.

6. Antriebssystem nach einem der vorhergehenden Ansprüche, wobei die Planetenträgerlager (115, 116, 125, 126) als Gleitlager ausgeführt sind.

7. Antriebssystem nach einem der vorhergehenden Ansprüche, wobei die Gleitlager (117, 127, 231, 234, 237) ein beidseitig wirkendes Axialgleitlager umfassen.

8. Antriebssystem nach einem der vorhergehenden Ansprüche, wobei die Gleitlager (117, 127, 231, 234, 237) ein Gleitlager mit und ohne Segmentierung umfassen.

9. Antriebssystem nach einem der vorhergehenden Ansprüche, wobei die Gleitlager (117, 127, 231, 234, 237) ein Gleitlager mit einstellbarem Axial-und Radialspiel umfassen.

10. Antriebssystem nach einem der vorhergehenden Ansprüche, wobei die Schmierung der Gleitlager (117, 127, 231, 234, 237) mittels Niederdruck, Hochdruck oder Gravitation erfolgt.

11. Antriebssystem nach einem der vorhergehenden Ansprüche, wobei das Antriebssystem eine Trennfuge (3) zur axialen Trennung des Getriebes (1) von dem Generator (2) aufweist.
